(19) **Europäisches Patentamt**

**European Patent Office**

**Office européen des brevets**

(11) **EP 1 016 151 B1**

(12) **EUROPEAN PATENT SPECIFICATION**

(45) Date of publication and mention
of the grant of the patent:
**30.01.2002 Bulletin 2002/05**

(51) Int Cl.7: **H01M 4/62**, C08F 214/22

(21) Application number: **98917700.1**

(86) International application number:
**PCT/JP98/01930**

(22) Date of filing: **27.04.1998**

(87) International publication number:
**WO 98/49737 (05.11.1998 Gazette 1998/44)**

(54) **VINYLIDENE FLUORIDE POLYMER-BASED BINDER SOLUTION AND ELECTRODE-FORMING COMPOSITION**

BINDEMITTEL-LÖSUNG ENTHALTEND POLYVINYLIDENFLUORID UND ZUSAMMENSETZUNG ZUR HERSTELLUNG VON ELEKTRODEN

SOLUTION LIANTE A BASE DE POLYMERE DE FLUORURE DE VINYLIDENE ET COMPOSITION SERVANT A CREER UNE ELECTRODE

(84) Designated Contracting States:
**DE FR GB NL**

(30) Priority: **28.04.1997 JP 12286297**

(43) Date of publication of application:
**05.07.2000 Bulletin 2000/27**

(73) Proprietor: **KUREHA KAGAKU KOGYO KABUSHIKI KAISHA**
**Chuo-ku, Tokyo 103-8552 (JP)**

(72) Inventors:
• **HORIE, Katsuo**
**Iwaki-shi, Fukushima-ken 974-0144 (JP)**
• **KATSURAO, Takumi**
**Iwaki-shi, Fukushima-ken 974-8232 (JP)**
• **NAGAI, Aisaku**
**Iwaki-shi, Fukushima-ken 974-8261 (JP)**

(74) Representative: **Kyle, Diana**
**Elkington and Fife Prospect House 8 Pembroke Road**
**Sevenoaks, Kent TN13 1XR (GB)**

(56) References cited:
| | |
|---|---|
| **EP-A- 0 601 754** | **EP-A- 0 650 982** |
| **EP-A- 0 695 766** | **EP-A- 0 751 157** |
| **WO-A-97/32347** | **US-A- 4 710 335** |

• KIRK-OTHMER: "Encyclopedia of Chemical Engineering" 1994 , JOHN WILEY & SONS , NEW YORK XP002068991 Forth ed., vol. 11, pages 694 - 712 see page 698 - page 699 see page 703
• JOSEPH C. SALAMONE (ED.): "Polymeric Materials Encyclopedia" 1996 , CRC PRESS , BOCA RATON XP002068992 vol. 9, pages 7115-7138 see page 7115 see page 7118 see page 7125

**Description**

[TECHNICAL FIELD]

The present invention relates to a binder solution and an electrode-forming composition for forming an electrode suitable for use in a non-aqueous electrolytic solution within a non-aqueous electrochemical device, such as a non-aqueous (secondary) battery, particularly a lithium ion battery, or an electric double layer capacitor; and an electrode structure, and further a non-aqueous battery, respectively obtained therefrom.

[BACKGROUND ART]

Accompanying the reduction in size and weight of electronic apparatus and devices in recent years, there has been a remarkably increasing demand for reduction in size and weight of a battery as a power supply for such electronic apparatus and devices. In order to generate a larger energy from a battery of small volume and weight, it is desirable to generate a higher voltage from one battery. From this viewpoint, much attention has been called to a battery using a non-aqueous electrolytic solution in combination with a negative electrode substance comprising, e.g., lithium or a carbonaceous material capable of being doped with lithium ions, and a positive electrode active substance comprising, e.g., a lithium-cobalt oxide.

However, in such a non-aqueous battery, the non-aqueous electrolytic solution shows only a low ionic conductivity on the order of $10^{-2}$ - $10^{-4}$ S/cm compared with an ordinary level ionic conductivity of ca. $10^{-1}$ S/cm in an aqueous electrolytic solution, so that it becomes essential to use an electrode (layer) in a small thickness of several $\mu$m to several hundred $\mu$m and in a large area. As a method of economically obtaining such a thin and large-area electrode, it has been known to disperse a powdery electrode material comprising an electrode active substance in a binder solution which is obtained by dissolving an organic polymer functioning as a binder for the powdery electrode material to form an electrode-forming composition and applying the composition onto an electroconductive substrate, such as a metal foil or a metal net, followed by drying to form a composite electrode layer.

Further, such a structure comprising a thin electrode layer of a powdery electrode material and a resinous binder on an electroconductive substrate is similarly used as an electrode structure for an electric double layer capacitor (e.g., as disclosed in Japanese Laid-Open Patent Application (JP-A) 7-82450).

As such a binder solution for forming electrodes used in non-aqueous electro-chemical devices, such as a non-aqueous battery and an electric double layer capacitor, those obtained by dissolving various grades of vinylidene fluoride polymers in polar solvents, such as N-methyl-2-pyrrolidone, dimethylformamide, N,N-dimethylacetamide have been known as disclosed in Japanese Laid-Open Patent Application (JP-A) 6-93025 and U.S. Patent No. 5,415,958. This is because a vinylidene fluoride polymer is excellent in heat resistance, chemical resistance, oxidation-reduction resistance, etc., and is soluble in a polar solvent as described above. On the other hand, a vinylidene fluoride polymer is stable against a non-aqueous electrolytic solution while it is swollen to some extent within such a non-aqueous electrolytic solution. Further, a vinylidene fluoride polymer can retain a good adhesion onto a substrate of metal, etc., by copolymerization or modification.

However, in the electrode structure comprising a vinylidene fluoride polymer as a binder, it is inevitable that the binder is swollen to some extent: in the non-aqueous electrolytic solution since the vinylidene fluoride polymer principally comprising polar monomer units has a good affinity with a polar solvent constituting the electrolytic solution. If the binder is swollen when the electrode structure is soaked in the electrolytic solution, the contact resistance between the powdery electrode materials, and between the electroconductive substrate and the powdery electrode materials, is increased, thereby lowering the discharge capacity of the battery with time and deteriorating the charge-discharge cycle performance. Further, in case where the swelling is severely caused, a portion of the composite electrode layer is locally peeled off the conductive substrate thus failing to participate in charge-discharge phenomena, so that the remaining portion of the electrode material is excessively charged to result in a problem from the viewpoint of safety.

[DISCLOSURE OF INVENTION]

An object of the present invention is to provide use of a vinylidene fluoride polymer-based binder solution capable of reducing the swellability of the binder constituting the electrode structure and preventing the peeling of the composite electrode layer, thereby allowing the production of a battery which is safe and excellent in cycle performance.

Another object of the present invention is provide an electrode-forming composition containing the binder solution, and an electrode structure and a battery formed by using the electrode-forming composition.

As a result of our study, it has been found possible to improve the stability (i.e., reduce the swellability) of a vinylidene fluoride within a solvent by appropriately controlling the manner of linkage of monomer units contained in the vinylidene fluoride polymer. More specifically, it has been hitherto known that the stability of a vinylidene fluoride polymer in a solvent depends on its inherent viscosity as a measure of molecular weight thereof, whereas it has been now found that the stability is still more affected by the content of abnormal linkage therein so that a lower abnormal linkage content provides a better stability in the solvent, as a result of our study. Regarding the reason of the improvement, we consider as follows. Vinylidene fluoride monomer ($CH_2=CF_2$) comprises two hydrogen atoms attached to one carbon of ethylene structure and two fluorine atoms attached to the other carbon. Accordingly, during the progress of polymerization, there can occur two-modes of polymer chain growth depending on whether the newly polymerized vinylidene fluoride molecule ($CH_2=CF_2$) is attached to the existing polymer chain from its hydrogen-attached carbon ($-CH_2-$) or from its fluorine-attached carbon ($-CF_2-$). As a result, a major linkage (portion) of the resultant polymer chain may comprise hydrogen-attached carbons and fluorine-attached carbons arranged alternately (... $-CH_2-CF_2-CH_2-CF_2-$ ...), but some linkage (portion) can comprise hydrogen-attached carbons and fluorine-attached carbons in a different arrangement (... $-CH_2-CF_2-CF_2-CH_2$ ..., or ... $-CF_2-CH_2-CH_2-CF_2$ ...). This linkage (portion) comprising non-alternately arranged hydrogen-attached carbons and fluorine-attached carbons is called an abnormal linkage (portion). The term "abnormal linkage content" used herein refers to a percentage of the abnormal linkage to the whole vinylidene fluoride monomer linkages in the vinylidene fluoride polymer. There is no substantial difference in atomic size between a hydrogen atom and a fluorine atom by nature, so that the abnormal linkage portion is also incorporated in the crystalline portion of a vinylidene fluoride polymer. However, if such an abnormal linkage portion is present in a larger proportion, the crystalline portion is caused to have a lower packing density and a reduced interaction between molecular chains to provide a lower crystalline melting point, leading to a lower resistance to a non-aqueous electrolytic solution and a lower swelling resistance in the electrolytic solution of the resultant vinylidene fluoride polymer. This is assumed to be a reason why a lower abnormal linkage content provides a better resistance to and a lower swellability in an electrolytic solution. Such a vinylidene fluoride polymer having a lower abnormal linkage content can be produced by polymerization at a temperature (around or lower than room temperature) which is lower than a polymerization temperature adopted for producing conventional vinylidene fluoride polymers for binders. A method for measuring the abnormal linkage content of a vinylidene fluoride polymer will be described later.

According to the present invention based on the above knowledge, there is provided use of a vinylidene fluoride polymer having an abnormal linkage content of below 4.0 % in an organic solvent as a binder solution for forming an electrode suitable for use in a non-aqueous electrolytic solution.

According to another aspect of the present invention, there is also provided an electrode-forming composition comprising a mixture of a powdery electrode material with the above-mentioned binder solution.

The present invention further provides an electrode structure suitable for use in a non-aqueous electrolytic solution, comprising: an electroconductive substrate, and a composite electrode layer formed on at least one surface of the electro-conductive substrate; said composite electrode layer comprising a powdery electrode material and a binder comprising a vinylidene fluoride polymer having an abnormal linkage content of below 4 %.

The present invention further provides a non-aqueous battery, comprising: a positive electrode, a negative electrode, and a non-aqueous electrolytic solution disposed between the positive and negative electrodes; wherein at least one of the positive and negative electrodes comprises an electrode structure as described above.

[BRIEF DESCRIPTION OF THE DRAWINGS]

Figures 1 and 2 are each a partial sectional view of an embodiment of the electrode structure according to the invention.

Figure 3 is a partial sectional view schematically showing a laminate structure of an electric double layer capacitor which can be constituted according to the invention.

Figure 4 is a partially exploded perspective view of a non-aqueous secondary battery which can be constituted according to the invention.

Figure 5 is a graph showing cycle characteristics of lithium secondary batteries (Cells 1 - 5) including negative electrodes formed by using electrode-forming compositions according to Examples 4 - 6 and Comparative Examples 3 and 4.

[DETAILED DESCRIPTION OF THE INVENTION]

The vinylidene fluoride polymer used in the present invention may include vinylidene fluoride homopolymer, vinylidene fluoride copolymer and modified products of these. Vinylidene fluoride homopolymer is preferred in view of resistance to a non-aqueous electrolytic solution, particularly anti-swelling property. However, the homopolymer is liable to exhibit a somewhat low adhesion onto an electroconductive substrate, e.g., metal, so that it is preferred to use a copolymer of vinylidene fluoride with another monomer, particularly an unsaturated dibasic acid monoester, a vinylene carbonate, an epoxy group-containing vinyl monomer, etc., to obtain a copolymer having a polar group, such as a carboxyl group, a carbonate group or an epoxy group (similar to those disclosed in U.S. Patent No. 5,415,958 except for the abnormal linkage content). It is also preferred to use a modified vinylidene fluoride polymer obtained by treating such a vinylidene fluoride homopolymer or copolymer in a solvent capable of dissolving or swelling such a vinylidene fluoride polymer with a silane coupling agent or titanate coupling agent having a group reactive with the vinylidene fluoride polymer, such as an amino group or a mercapto group, and a hydrolyzable group in combination. In order to retain a good anti-swelling resistance against a non-aqueous electrolytic solution as a whole, however, the vinylidene fluoride polymer may preferably retain at least 90 mol. %, particularly at least 95 mol. %, of untreated vinylidene fluoride units.

To the above-mentioned vinylidene fluoride polymer, it is possible to admix an organic acid, such as acrylic acid, maleic acid, maleic anhydride or fumaric acid, or a low-molecular weight compound or polymer having a good miscibility with the vinylidene fluoride polymer, such as an acrylic polymer.

It is also possible to improve the adhesiveness onto a metal electrode by heating or addition of an alkaline substance to the vinylidene fluoride polymer to generate hydrofluoric acid in an amount of 400 - 20,000 ppm of the vinylidene fluoride polymer and also by adding an acid, such as an organic acid.

The vinylidene fluoride polymer used in the present invention is characterized by an abnormal linkage content of below 4 %, but may preferably have an abnormal linkage content of at most 3.5 %, particularly at most 3.0 %.

The vinylidene fluoride polymer may preferably have a crystalline melting peak temperature (melting point) of at least 173 °C, more preferably at least 175 °C, as measured by differential scanning calorimetry (DSC) on heating at a temperature-raising rate of 10 °C/min.

Accordingly, it is preferred that the vinylidene fluoride polymer has a abnormal linkage content of below 4 % and a melting point of at least 173 °C, more preferably an abnormal linkage content of at most 3.5 % and a melting point of at least 175 °C.

The vinylidene fluoride polymer may preferably have an inherent viscosity (i.e., a logarithmic viscosity number as measured at a concentration of 4 g-resin in 1 liter of N,N-dimethylformamide at 30 °C) of 0.5 - 15 dl/g, more preferably 1.0 - 10 dl/g, further preferably 1.3 - 5.0 dl/g.

If the vinylidene fluoride polymer has an inherent viscosity of below 0.5 dl/g, the polymer is liable to be swollen in the electrolytic solution and only have a low effect of binding the powdery electrode material, so that it is difficult to obtain the effect of the present invention. On the other hand, a vinylidene fluoride polymer having an inherent viscosity in excess of 15 dl/g, causes not only a difficulty in dissolution thereof in a solvent but also a difficulty in suppressing the gelation of a resultant binder solution, thus being liable to fail in application of an electrode-forming composition obtained therefrom.

The vinylidene fluoride polymer used in the present invention may be prepared by polymerization of vinylidene fluoride or copolymerization of vinylidene fluoride with a comonomer copolymerizable therewith. The polymerization or copolymerization may be performed by suspension polymerization, emulsion polymerization, solution polymerization, etc. From the easiness of post treatment, it is particularly preferred to perform suspension polymerization in an aqueous medium. However, in the case of performing the polymerization at a temperature of 0 °C or below, it is particularly preferred to effect emulsion polymerization in a mixture medium of water and alcohol.

In the suspension polymerization using water as a dispersion medium, it is possible to use a suspension aid, such as methyl cellulose, methoxylated methyl cellulose, propoxidized methyl cellulose, hydroxyethyl cellulose, hydroxypropyl cellulose, polyvinyl alcohol, polyethylene oxide or gelatin.

In the case of emulsion polymerization, it is preferred to use a fluorine-containing surfactant, such as sodium perfluorooctanoate.

As for a polymerization initiator in the suspension polymerization, it is possible to use, e.g., diisopropylperoxydicarbonate, dinormal peroxydicarbonate or isobutyl peroxide, soluble in the vinylidene fluoride monomer.

As for a polymerization initiator in the emulsion polymerization, it is possible to use a redox catalyst system including an oxidizing agent (e.g., hydrogen peroxide, ammonium persulfate or potassium persulfate), a reducing agent (e.g., sodium sulfite), and a transition metal compound (e.g., ferrous nitrate).

It is also possible to add a chain transfer agent, such as ethyl acetate, methyl acetate, acetone, ethanol, n-propanol, acetaldehyde, propylaldehyde, ethyl propionate, or carbon tetrachloride, so as to control the polymerization degree of the resultant copolymer. Such a chain transfer agent may be used as desired in an amount of 0.1 - 5 wt. % of the total monomer amount.

The binder solution used according to the present invention may be prepared by dissolving the above-mentioned vinylidene fluoride polymer in an organic solvent. The organic solvent used for this purpose may preferably be a polar one, whose examples may includle: N-methyl-2-pyrrolidone, dimethylformamide, N,N-dimethylacetamide, N, N-dimethylsulfoxide, hexamethylphosphamide, dioxane, tetrahydrofuran, tetramethylurea, triethyl phosphate, and trimethyl phosphate. As the vinylidene fluoride polymer used in the present invention has a much higher crystallinity than a conventional one and is difficult to dissolve in an ordinary organic solvent, it is further preferred to use a nitrogen-containing organic solvent having a larger dissolving power, such as N-methyl-2-pyrrolidone, dimethylformamide or N, N-dimethylacetamide among the above-mentioned organic solvents. These organic solvents may be used singly or in mixture of two or more species.

For obtaining the binder solution used according to the present invention, it is preferred to dissolve 0.1 - 15 wt. parts, particularly 1 - 10 wt. parts, of the above-mentioned vinylidene fluoride polymer in 100 wt. parts of such an organic solvent. Below 0.1 wt. part, the polymer occupies too small a proportion in the solution, thus being liable to fail in exhibiting its performance of binding the powdery electrode material. Above 15 wt. parts, the solution is liable to have an abnormally high viscosity, so that not only the preparation of the electrode-forming composition becomes difficult but also the suppression of gelation of the electrode-forming composition becomes difficult, thus being liable to fail in uniform application thereof onto an electroconductive substrate, in extreme cases.

In order to prepare the vinylidene fluoride polymer binder solution used according to the present invention, it is preferred to dissolve the vinylidene fluoride polymer in an organic solvent at a temperature of 20 - 200 °C, more preferably at an elevated temperature of 30 - 120 °C.

An electrode-forming composition may be obtained by adding and dispersing a powdery electrode material (an active substance for a battery or an electric double layer capacitor, and optional additives, such as an electroconductivity-imparting additive) into the thus-obtained vinylidene fluoride polymer binder solution according to the present invention.

In the case of forming a positive electrode for a lithium ion battery, the active substance may comprise a composite metal chalcogenide represented by a general formula of $LiMY_2$, wherein M denotes at least one species of transition metals such as Co, Hi, Fe, Mn, Cr and V; and Y denotes a chalcogen, such as O or S. Among these, it is preferred to use a lithium-based composite metal oxide represented by a general formula of $LiMO_2$, wherein M is the same as above. Preferred examples thereof may include: $LiCoO_2$, $LiNiO_2$, $LiNi_xCo_{1-x}O_2$ (0 < x < 1), and spinel-structured $LiMn_2O_4$.

In the case of forming a negative electrode for a lithium battery, the active substance may preferably comprise a carbonaceous material, such as graphite, activated carbon or a carbonaceous material obtained by carbonization of phenolic resin, pitch, etc. The carbonaceous material may preferably be used in the form of particles having an average diameter of ca. 0.5 - 100 µm.

An electroconductivity-imparting additive may be added in order to improve the conductivity of a resultant composite electrode layer formed by applying and drying of the electrode-forming composition of the present invention, particularly in case of using an active substance, such as $LiCoO_2$, showing a small electron-conductivity. Examples thereof may include: carbonaceous materials, such as carbon black, graphite fine powder and fiber, and fine powder and fiber of metals, such as nickel and aluminum. In the case of using a carbonaceous material having a large electroconductivity as an electrode material, it is unnecessary to add such an electroconductivity-imparting additive.

The active substance for an electric double layer capacitor may preferably comprise fine particles or fiber, such as activated carbon, activated carbon fiber, silica or alumina particles, having an average particle (or fiber) diameter of 0.5 - 100 µm and a specific surface area of 100 - 3000 $m^2$/g, i.e., having a relatively small particle (or fiber) diameter and a relatively large specific surface area compared with those of active substances for batteries.

The electrode-forming composition according to the present invention may preferably be formed by mixing 100 wt. parts of the powdery electrode material with the binder solution containing 0.1 - 50 wt. parts, particularly 1 - 20 wt. parts of the vinylidene fluoride polymer.

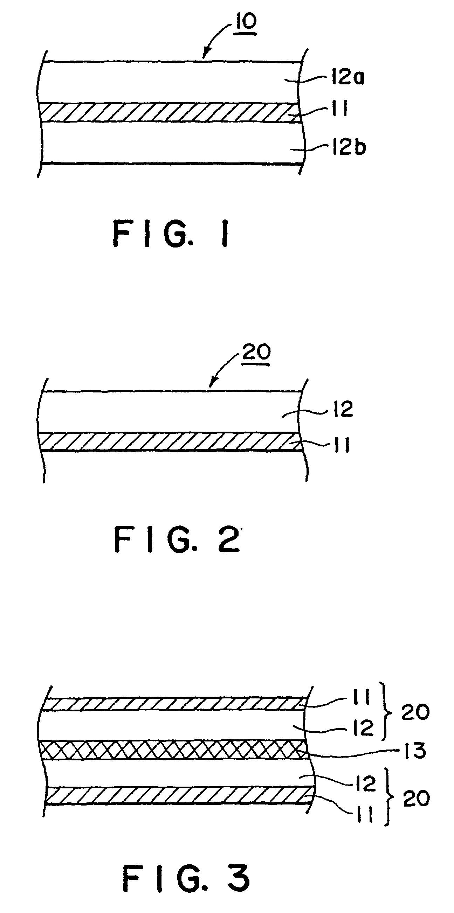

The thus-prepared electrode-forming composition may be used for forming electrode structures having partial sectional structures as shown in Figure 1 and Figure 2. More specifically, the electrode-forming composition may be applied onto both surfaces (Figure 1) or one surface (Figure 2) of an electroconductive substrate 11 comprising a foil or wire net of a metal, such as iron, stainless steel, steel, copper, aluminum, nickel or titanium and having a thickness of, e.g., 5 - 100 µm, or 5 - 20 µm for a small-sized device, and dried at, e.g., 50 - 170 °C to form a composite electrode layer (12a, 12b or 12) of, e.g., 10 - 1000 µm in thickness for a small-sized device, thereby providing an electrode structure (10 or 20).

Alternatively, it is also possible to form an electrode structure similar to the one shown in Figure 1 or Figure 2 by once forming a composite electrode layer 12 as shown in Figure 2 on an electroconductive substrate 11 or an arbitrary substrate having a better releasability by application and drying, then peeling only the composite electrode layer 12 apart from the substrate to obtain an electrode sheet, and then applying the electrode sheet onto an electroconductive substrate 11 with an electroconductive adhesive by a manufacturer of an electrochemical device, such as a battery.

The thus-formed electrode structure 10 or 20 may preferably be used as an electrode for a battery or an electric double layer capacitor wherein it is used in the state of being dipped in a non-aqueous electrolytic solution. For example, a laminate structure as shown in Figure 3 may be formed by disposing a pair of electrode structures 20 shown in Figure 2 so that their composite electrode layers 12 are disposed on inner sides and opposite to each other, disposing a liquid permeable separator 13 so as to be sandwiched between the composite electrode layers 12, and impregnating the composite electrode layers 12 and the separator 13 with a non-aqueous electrolytic solution. Such a laminate structure as shown in Figure 3 may constitute a battery or an electric double layer capacitor.

Further, the electrode structure according to the present invention, preferably in the form of an electrodes structure 10 (Figure 1) having composite electrode layers 12a and 12b on both sides, may be used as a positive electrode or a negative electrode of a non-aqueous battery, particularly a lithium ion battery.

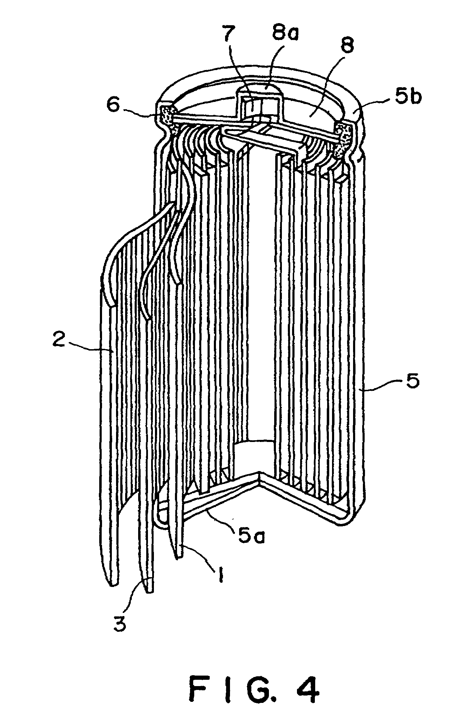

Figure 4 is a partially exploded perspective view of a lithium secondary battery as an embodiment of a non-aqueous battery according to the present invention, including an electrode structure prepared in the above-described manner.

More specifically, the secondary battery basically includes a laminate structure including a positive electrode 1, a negative electrode 2 and a separator 3 disposed between the positive and negative electrodes 1 and 2 and comprising a fine porous film of a polymeric material, such as polyethylene or polypropylene, impregnated with an electrolytic solution. The laminate structure is wound in a vortex shape to form an electricity-generating element which is housed within a metal casing 5 having a bottom constituting a negative electrode terminal 5a. In the secondary battery, the negative electrode 2 is electrically connected to the negative electrode terminal 5a, and the uppermost portion of the battery is constituted by disposing a gasket 6 and a safety valve 7 covered with a top plate 8 having a projection constituting a positive electrode terminal 8a electrically connected to the positive electrode. Further, the uppermost rim 5b of the casing 5 is crimped toward the inner side to form an entirely sealed cell structure enclosing the electricity-generating element. The positive electrode 1 and the negative electrode 2 may have a structure of the electrode structure 10 or 20 shown in Figure 1 or 2.

The composite electrode layer (12a, 12b or 12) may be formed in the above-described manner, i.e., by forming a layer of a composite electrode material comprising a powdery electrode material (a fine powdery or fibrous active substance, and optionally added electroconductivity-imparting additive, such as carbon) and a vinylidene fluoride polymer binder, applied onto an electroconductive substrate (11) as described above.

The non-aqueous electrolyte solution impregnating the separator 3 may comprise a solution of an electrolyte, such as a lithium salt, in a non-aqueous solvent (organic solvent).

Examples of the electrolyte may include:

$LiPF_6$, $LiAsF_6$, $LiClO_3$, $LiBF_4$, $CH_3SO_3Li$, $CF_3SO_3Li$, $LiN(SO_2CF_3)_2$, $LiC(SO_2CF_3)_3$, LiCl, and LiBr. Examples of the organic solvent for such an electrolyte may include: propylene carbonate, ethylene carbonate, 1,2-dimethoxyethane, 1,2-diethoxyethane, dimethyl carbonate, diethyl carbonate, methyl ethyl carbonate, $\gamma$-butyrolactone, methyl propionate, ethyl propionate, and mixtures of these, but they are not exhaustive.

In the above, a cylindrical battery has been described as an embodiment of the non-aqueous battery according to the present invention. However, the non-aqueous battery according to the present invention can basically have any other shapes, such as those of a coin, a rectangular parallelepiped, or a paper or sheet.

[Examples]

Hereinbelow, the present invention will be described more specifically based on Examples and Comparative Examples.

Example 1

In a 2 liter-autoclave, 1075 g of de-ionized water, 4.2 g of methyl cellulose, 10.5 g of di-normal-propyl peroxydicarbonate and 420 g of vinylidene fluoride were charged and subjected to suspension polymerization for 88 hours at 3 °C while cooling the circumference of the autoclave with a refrigerant. After the polymerization, the polymerizate slurry was de-watered, washed with water, and dried at 80 °C for 20 hours to obtain a powdery polymer. The thus-obtained vinylidene fluoride polymer showed an inherent viscosity of 0.9 (dl/g).

Example 2

In a 2 liter-autoclave, 784 g of de-ionized water, 336 g of methanol, 2.0 g of hydrogen peroxide, 4 g of aldehyde sodium sulfoxide dehydrate, 0.08 g of ferrous nitrate and 420 g of vinylidene fluoride were charged and subjected to redox polymerization for 8 hours at -15 °C while cooling the circumference of the autoclave with a refrigerant. After the polymerization, the polymerizate slurry was dewatered, washed with water, and dried at 80 °C for 20 hours to obtain a powdery polymer. The thus-obtained vinylidene fluoride polymer showed an inherent viscosity of 0.8 (dl/g).

Example 3

In a 2 liter-autoclave, 1040 g of de-ionized water, 0.4 g of methyl cellulose, 8 g of ethyl acetate,. 2 g of di-normal-propyl peroxydicarbonate and 420 g of vinylidene fluoride were charged and subjected to suspension polymerization for 22 hours at 15 °C while cooling the autoclave with water. After the polymerization, the polymerizate slurry was dewatered, washed with water, and dried at 80 °C for 20 hours to obtain a powdery polymer. The thus-obtained vinylidene fluoride polymer showed an inherent viscosity of 1.1 (dl/g).

Comparative Example 1

A vinylidene fluoride polymer ("KYNAR731", available from Penwalt Co.) was used, which exhibited an inherent viscosity of 1.0 (dl/g).

Comparative Example 2

A vinylidene fluoride polymer ("FORAFLON 1000LD", available from Atochem Inc.) was used, which exhibited an inherent viscosity of 1.1 (dl/g).

The vinylidene fluoride polymers in the above-described Examples and Comparative Examples were subjected to measurement of abnormal linkage content, melting point, inherent viscosity and swellability, respectively, in the following manners.

[Abnormal linkage content]

The abnormal linkage content of a vinylidene fluoride polymer is determined from diffraction peaks of its $^{19}$F-NMR spectrum.

More specifically, ca. 5 mg of a vinylidene fluoride polymer sample is dissolved in a solvent mixture of 0.4 ml of dimethylformamide (DMF) and 0.1 ml of deuterium dimethylformamide (DMF-$d_7$) as a solvent for NMR measurement, and the resultant solution is subjected to the $^{19}$F-NMR measurement at room temperature.

A resultant $^{19}$F-NMR spectrum generally exhibits 5 major peaks, which appear at -91.6 ppm, -92.1 ppm, -94.7 ppm, -113.5 ppm and -115.9 ppm, respectively, with reference to $CFCl_3$.

Among these peaks, peaks at -113.5 ppm and -115.9 ppm are identified as peaks attributable to the abnormal linkage.

The abnormal linkage content is determined as follows. The areas of the 5 peaks are respectively measured and summed up to provide a total area $S_0$. On the other hand, the areas of the peaks at -113.5 ppm and -115.9 ppm are denoted by $S_1$ and $S_2$, respectively. Then, the abnormal linkage content is calculated according to the following formula:

$$\text{Abnormal linkage content}$$

$$= [\{(S_1 + S_2)/2\}/S_0] \times 100 \ (\%)$$

[Melting point]

A press sheet of a vinylidene fluoride polymer sample is stamped to provide 5 mg of a sample, which is charged in an aluminum pan and subjected to differential scanning calorimetry at a temperature-raising rate of 10 °C/min by using an apparatus ("TC10A-Type Processor", available from Mettler Instrumente A.G.). In a first heating, the sample is completely melted by holding at 230 °C for 1 minute and cooled to 40 °C. Then, a heat-absorption peak temperature in a second heating is determined as a melting point (Tmp).

[Inherent viscosity]

80 mg of a powdery sample is dissolved in 20 ml of N,N-dimethylformamide, and the viscosity of the resultant polymer solution is measured by an Ubbelohde viscometer in a thermostat vessel at 30 °C to calculate an inherent viscosity $\eta_i$ (dl/g) according to the following equation:

$$\eta_i = (1/C)\cdot\ln(\eta/\eta_0).$$

wherein $\eta$ denotes a measured viscosity of a polymer solution; $\eta_0$, a viscosity of solvent N,N-dimethylformamide; and C, a concentration of the solution (= 0.4 g/dl).

[Swellability]

A sample polymer solution in N-methyl-2-pyrrolidone at a concentration of 10 wt. % is cast onto a glass sheet and dried for 5 hours at 130 °C. The cast film is peeled apart from the glass sheet and then further dried at 80 °C under a reduced pressure to prepare a ca. 200 μm-thick film.

The thus-obtained cast film in a size of 17 mm x 35 mm is dipped for 6 days at 70 °C in an electrolytic solution having the following composition, and the percentage weight increase of the dipped film was measured as a swellability.

| (Electrolytic solution) | |
|---|---|
| Propylene carbonate | 38.1 wt. parts |
| Dimethyl carbonate | 33.9 wt. parts |
| Methyl ethyl carbonate | 16.0 wt. parts |
| $LiPF_6$ (electrolyte) | 12.0 wt. parts |

The results of the above measurements are inclusively shown in the following Table 1.

Table 1

| | Abnormal linkage content (%) | Melting point (°C) | Inherent viscosity (dl/g) | Swellability after 6 days (%) |
|---|---|---|---|---|
| Ex. 1 | 3.7 | 175 | 0.9 | 18 |
| Ex. 2 | 2.9 | 176 | 0.8 | 16 |
| Ex. 3 | 3.9 | 174 | 1.1 | 20 |
| Comp. Ex. 1 | 4.9 | 169 | 1.0 | 25 |
| " 2 | 5.1 | 168 | 1.1 | 23 |

Example 4

0.30 g of the vinylidene fluoride polymer having an abnormal linkage content of 2.9 % prepared in Example 2 was uniformly dissolved in 14.7 g of the N-methyl-2-pyrrolidone (NMP) at 60 °C to prepare a binder solution, into which 2.7 g of a powdery carbonaceous material of pitch origin having an average particle size of ca. 20 μm and a specific surface area of ca. 3 m$^2$/g was added and uniformly mixed and dispersed by a homogenizer to form a pasty electrode-forming composition.

The electrode-forming composition had a weight percentage of the polymer with respect to the total weight of the polymer and the powdery carbonaceous material of 10 wt. %.

The pasty electrode-forming composition was uniformly applied onto an aluminum foil, dried and peeled apart from the aluminum foil to be stamped into a 15 mm-dia. disk. The stamped composite layer was pressure-bonded onto a 17 mm-dia. stainless steel net disk by means of a press, to form a negative electrode having a ca. 130 μm-thick composite electrode layer.

Separately, a positive electrode was prepared from a pasty composition obtained by mixing 90 wt. parts of $LiCoO_2$ (active substance), 7 wt. parts of carbon black (electroconductivity-imparting additive), 3 wt. parts of vinylidene fluoride polymer ($\zeta_i$ = 1.3 dl/g) and 56 wt. parts of NMP. The composition was uniformly applied onto an aluminum foil and dried. Then, the dried composition layer was peeled apart from the aluminum foil and stamped into a 14 mm-dia. disk. The disk was press-bonded onto a 16 mm-dia. stainless steel mesh disk to form a positive electrode having a ca. 100 μm-thick composite electrode layer.

The thus-formed positive electrode was used for preparation of a battery (cell) in combination with the negative electrode prepared in the above-described manner. An electrolytic solution was prepared by adding $LiPF_6$ (electrolyte) at a rate of 1 mol/l in a 1:1 (by volume) mixture solvent of ethylene carbonate and diethyl carbonate. A 25 μm-thick separator of porous polypropylene membrane was impregnated with the electrolytic solution and sandwiched between the positive electrode and the negative electrode to form a coin-shaped non-aqueous lithium secondary battery (Cell 1).

Example 5

A non-aqueous lithium secondary battery (Cell 2) was prepared in the same manner as in Example 4 except for using the vinylidene fluoride polymer having an abnormal linkage content of 3.7 % of Example 1.

Example 6

A non-aqueous lithium secondary battery (Cell 3) was prepared in the same manner as in Example 4 except for using the vinylidene fluoride polymer having an abnormal linkage content of 3.9 % of Example 3.

Comparative Example 3

A non-aqueous lithium secondary battery (Cell 4) was prepared in the same manner as in Example 4 except for using the vinylidene fluoride polymer having an abnormal linkage content of 4.9 % of Comparative Example 1.

Comparative Example 4

A non-aqueous lithium secondary battery (Cell 5) was prepared in the same manner as in Example 4 except for using the vinylidene fluoride polymer having an abnormal linkage content of 5.1 % of Comparative Example 2.

[Battery cycle performance test]

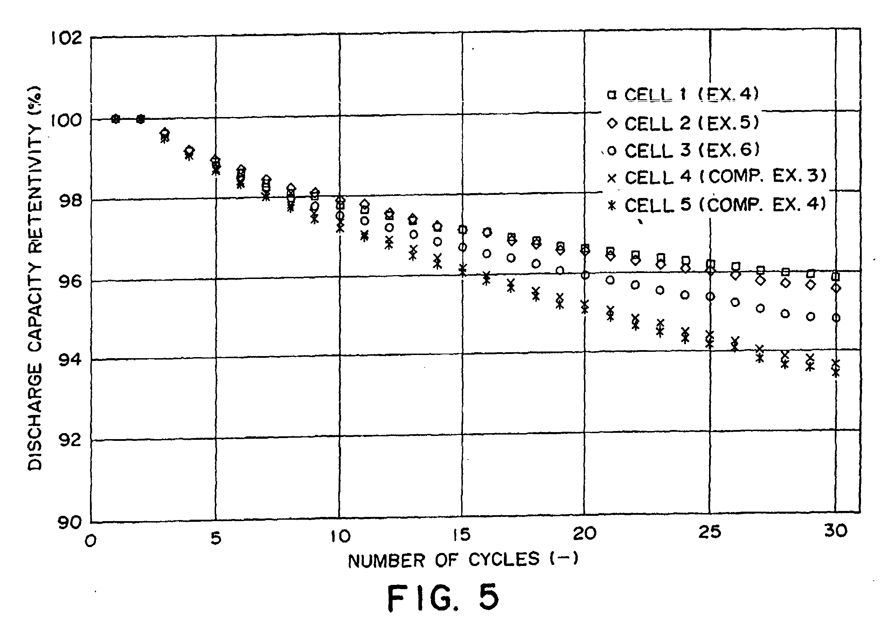

The above-prepared coin-shaped lithium secondary batteries (Cells 1 - 5) of Examples 4 - 6 and Comparative Examples 3 and 4 were respectively subjected to evaluation of charge-discharge cycle performances in the following manner.
Each battery was subjected to repetition of a charge-discharge cycle including charging at a constant current of 2.5 mA up to 4.2 volts and holding at 4.2 volts so that the total charging time did not exceed 2.5 hours (a constant current-constant voltage charging process), followed by discharging at a constant current of 2.5 mA down to 2.5 volts where the discharging was immediately interrupted (a constant current discharge process). The charge-discharge cycle was repeated while measuring a discharge capacity of the battery at each cycle. For each battery, a capacity retention ratio was measured for each of second and subsequent cycles by dividing the discharge capacity at these cycles with the discharge capacity at the second cycle and expressed in the unit of percentage (%) by multiplying the quotient with 100.
The results of the charge-discharge cycle performance test obtained with respect to the above-prepared secondary batteries (Cells 1 - 5) are inclusively shown in Figure 5.
As shown in Figure 5, the non-aqueous secondary batteries of the present invention (Cells 1 - 3) show better cycle performances with less decreases in discharge capacities.

[INDUSTRIAL APPLICABILITY]

As described above, the present invention provides a binder solution for providing electrodes for non-aqueous batteries and electric double layer capacitors by dissolving a vinylidene fluoride polymer having an abnormal linkage content of below 4 % in an organic solvent, whereby the stability of the electrode-forming binder against an electrolytic solution is improved, thereby providing a secondary battery or an electric double layer capacitor having an improved charge-discharge cycle performance.

**Claims**

1.  Use of a vinylidene fluoride polymer having an abnormal linkage content based on head-to-head and tail-to-tail inversions determined by $^{19}$F-NMR spectrum of below 4 % in an organic solvent as a binder solution for forming an electrode suitable for use in a non-aqueous electrolytic solution.

2.  Use according to Claim 1, wherein said vinylidene fluoride polymer is a homopolymer of vinylidene fluoride.

3.  Use according to Claim 1, wherein said vinylidene fluoride polymer is a copolymer of at least 95 mol. % of vinylidene fluoride and another monomer or a modified product of homopolymer or copolymer of vinylidene fluoride.

4.  Use according to Claim 1, wherein said vinylidene fluoride polymer is a carboxyl group-containing vinylidene fluoride polymer or an epoxy group-containing vinylidene fluoride polymer.

5. An electrode-forming composition, comprising a mixture of a powdery electrode material with a binder solution comprising a solution in an organic solvent of a vinylidene fluoride polymer having an abnormal linkage content based on head-to-head and tail-to-tail inversions determined by $^{19}$F-NMR spectrum of below 4 %.

6. An electrode structure suitable for use in a non-aqueous electrolytic solution, comprising: an electroconductive substrate, and a composite electrode layer formed on at least one surface of the electroconductive substrate: said composite electrode layer comprising a powdery electrode material and a binder comprising a vinylidene fluoride polymer having an abnormal linkage content based on head-to-head and tail-to-tail inversions determined by $^{19}$F-NMR spectrum of below 4 %.

7. A non-aqueous battery, comprising: a positive electrode, a negative electrode, and a non-aqueous electrolytic solution disposed between the positive and negative electrodes; wherein at least one of the positive and negative electrodes comprises an electrode structure according to Claim 6.

**Patentansprüche**

1. Verwendung von Vinylidenfluoridpolymer mit einem abnormalen Verknüpfungsgehalt, basierend auf Kopf-zu-Kopf- und Schwanz-zu-Schwanz-Inversionen, bestimmt durch $^{19}$F-NMR-Spektrum, von weniger als 4% in einem organischen Lösungsmittel, als Bindemittellösung zur Bildung einer Elektrode, welche geeignet ist für die Verwendung in einer nicht-wäßrigen elektrolytischen Lösung.

2. Verwendung nach Anspruch 1, worin das Vinylidenfluoridpolymer ein Homopolymer von Vinylidenfluorid ist.

3. Verwendung nach Anspruch 1, worin das Vinylidenfluoridpolymer ein Copolymer aus wenigstens 95 Mol-% Vinylidenfluorid und einem weiteren Monomer ist oder ein modifiziertes Produkt aus Homopolymer oder Copolymer von Vinylidenfluorid ist.

4. Verwendung nach Anspruch 1, worin das Vinylidenfluoridpolymer ein Carboxylgruppe enthaltendes Vinylidenfluoridpolymer oder ein Epoxygruppe enthaltendes Vinylidenfluoridpolymer ist.

5. Zusammensetzung zur Ausbildung einer Elektrode, umfassend eine Mischung aus einem pulverförmigen Elektrodenmaterial mit einer Bindemittellösung, umfassend eine Lösung in einem organischen Lösungsmittel eines Vinylidenfluoridpolymers mit einem abnormalen Verknüpfungsgehalt, basierend auf Kopf-zu-Kopf- und Schwanz-zu-Schwanz-Inversionen, bestimmt durch $^{19}$F-NMR-Spektrum, von weniger als 4%.

6. Elektrodenstruktur, geeignet für die Verwendung in einer nicht-wäßrigen elektrolytischen Lösung, umfassend: ein elektroleitendes Substrat und eine Elektrodenverbundschicht, ausgebildet auf wenigstens einer Oberfläche des elektroleitenden Substrats, wobei die Elektrodenverbundschicht ein pulverförmiges Elektrodenmaterial und ein Bindemittel, umfassend ein Vinylidenfluoridpolymer mit einem abnormalen Verknüpfungsgehalt, basierend auf Kopf-zu-Kopf- und Schwanz-zu-Schwanz-Inversionen, bestimmt durch $^{19}$F-NMR-Spektrum, von weniger als 4%, umfasst.

7. Nicht-wäßrige Batterie, umfassend eine positive Elektrode, eine negative Elektrode und eine nicht-wäßrige elektrytische Lösung, welche zwischen der positiven und der negativen Elektrode vorliegt, worin wenigstens eine der positiven und negativen Elektroden eine Elektrodenstruktur nach Anspruch 6 umfaßt.

**Revendications**

1. Utilisation d'un polymère de fluorure de vinylidène ayant une teneur en liaisons anormales, par rapport aux inversions tête-à-tête et queue-à-queue, déterminée par un spectre RMN-$^{19}$F, inférieure à 4 %, dans un solvant organique servant de solution liante, pour former une électrode pouvant être utilisée dans une solution électrolytique non-aqueuse.

2. Utilisation selon la revendication 1, pour laquelle ledit polymère de fluorure de vinylidène est un homopolymère de fluorure de vinylidène.

3. Utilisation selon la revendication 1, pour laquelle ledit polymère de fluorure de vinylidène est un copolymère d'au moins 95 % en moles de fluorure de vinylidène et d'un autre monomère, ou un produit modifié d'un homopolymère ou d'un copolymère du fluorure de vinylidène.

4. Utilisation selon la revendication 1, pour laquelle ledit polymère de fluorure de vinylidène est un polymère de fluorure de vinylidène contenant des groupes carboxyle ou un polymère de fluorure de vinylidène contenant des groupes époxy.

5. Composition formant une électrode, comprenant un mélange d'un matériau d'électrode en poudre et d'une solution liante comprenant une solution, dans un solvant organique, d'un polymère de fluorure de vinylidène ayant une teneur en liaisons anormales, par rapport aux inversions tête-à-tête et queue-à-queue, déterminée par un spectre RMN-$^{19}$F, inférieure à 4 %.

6. Structure d'électrode pouvant être utilisée dans une solution électrolytique non-aqueuse, comprenant un substrat conducteur de l'électricité et une couche électrode composite formée sur au moins une surface du substrat conducteur de l'électricité ; ladite couche électrode composite comprenant un matériau d'électrode en poudre et un liant comprenant un polymère de fluorure de vinylidène ayant une teneur en liaisons anormales, par rapport aux inversions tête-à-tête et queue-à-queue et déterminée par un spectre RMN-$^{19}$F, inférieure à 4 %.

7. Batterie non-aqueuse, comprenant un électrode positive, une électrode négative et une solution électrolytique non-aqueuse disposée entre l'électrode positive et l'électrode négative ; dans laquelle au moins l'une des électrodes, positive et négative, comprend une structure d'électrode selon la revendication 6.

10

12a
11
12b

FIG. 1

20

12
11

FIG. 2

11 }
20
12 }
13
12 }
20
11 }

FIG. 3

F I G. 4

FIG. 5

EP 1 016 151 B1